# EUROPÄISCHE PATENTANMELDUNG

(11) **EP 3 023 364 A1**
(43) Veröffentlichungstag der Anmeldung: **25.05.2016**
(21) Anmeldenummer: 15179897.2
(22) Anmeldetag: 05.08.2015
(51) Int. Cl.: B65G 1/04

(54) **REGALBEDIENGERÄT UND LAGERSYSTEM**

(30) Priorität: 21.11.2014 DE 102014117112
(71) Anmelder: WITRON Logistik + Informatik GmbH, 92711 Parkstein (DE)
(72) Erfinder: Winkler, Walter, 92711 Parkstein (DE)
(74) Vertreter: Lang, Christian

(57) **Zusammenfassung**

Die vorliegende Erfindung betrifft ein Regalbediengerät zur Ein - und Auslagerung von Gegenständen in ein Regal mit einem Lastaufnahmemittel (7) zur Aufnahme der ein - und auszulagernden Gegenstände auf dem Regalbediengerät,
einer Greifeinrichtung (12,13,14,15) zum Ergreifen der ein - und auszulagernden Gegenstände und zum Bewegen der Gegenstände aus dem Regal auf das Lastaufnahmemittel und/oder vom Lastaufnahmemittel in das Regal,
einem Fahrgestell (16), welches zum Bewegen des Regalbediengeräts auf einer ersten Ebene entlang mindestens eines Regals dient,
einer Hubeinrichtung (8,9), die am Fahrgestell angeordnet ist und an der das Lastaufnahmemittel angeordnet ist und dazu dient das Lastaufnahmemittel entlang einer Richtung zu bewegen, die quer zur ersten Ebene verläuft, wobei die Greifeinrichtung so ausgebildet ist, dass mehrere unterschiedliche Arten von Gegenstände gehandhabt werden können. Außerdem betrifft die Erfindung ein Lagersystem mit einem Regal und einem Lagerbediengerät.

## Beschreibung

### GEBIET DER ERFINDUNG

Die vorliegende Erfindung betrifft ein Regalbediengerät gemäß dem Oberbegriff des Anspruchs 1 sowie ein Lagersystem mit mindestens einem Regal und mindestens einem Regalbediengerät.

### STAND DER TECHNIK

In der Industrie und im Handel werden in vielfältiger Weise Güter und Waren vertrieben und verarbeitet, wobei die Güter und Waren häufig gelagert werden müssen, bevor sie weiterverarbeitet oder weiter umgeschlagen werden.

Dabei müssen üblicherweise eine Vielzahl von verschiedenen Artikeln gelagert werden und diese Artikel müssen in unterschiedlich großen Mengen ausgeliefert oder bereitgestellt werden, sodass für die Lagerung und Handhabung der Artikel ein großer Aufwand entstehen kann.

So werden beispielsweise in Versandzentren von Einzelhandelsketten Waren in großen Packgrößen von den Herstellern angeliefert, dort zwischengelagert und in kleinen Packgrößen bis hin zu einzelnen Waren an die Einzelhandelsgeschäfte ausgeliefert, um dort verkauft zu werden. In ähnlicher Weise werden bei Versandhändlern große Mengen bestimmter Waren eingekauft, zwischengelagert und entsprechend dem Abverkauf in kleineren Packungsgrößen oder als Einzelwaren versandt. Sowohl beim Versand der Waren an die Einzelhandelsgeschäfte als auch bei der Bearbeitung von Bestellungen im Versandhandel müssen die Waren kommissioniert, also für die einzelnen Aufträge entsprechend zusammengestellt werden. Hierbei müssen die Waren aus dem Lager entnommen und die Restbestände wieder in das Lager eingelagert werden. Eine effektive und kostengünstige Handhabung der Waren in derartigen Versand - und Logistikzentren setzt genauso wie in Lagern der Industrie, in der Produktionsgüter und Zwischenprodukte gelagert werden müssen, deshalb eine geeignete Lagerung der Waren voraus.

Üblicherweise werden von verschiedenen Waren unterschiedliche Mengen in bestimmten Zeiträumen benötigt, sodass einerseits eine ausreichend große, aber auch eine nicht größer als erforderliche Lagerhalterung notwendig ist, um einen effizienten Vertrieb oder eine wirtschaftliche Produktion zu gewährleisten. Entsprechend wird für verschiedene Waren und/oder zu verschiedenen Zeitpunkten für die gleiche Ware eine unterschiedlich große Lagerkapazität erforderlich. Darüber hinaus sollen die Waren und Artikel jedoch möglichst effektiv aus einem Lager entnommen und in dieses wieder eingelagert werden können, sodass eine möglichst automatisierte bzw. maschinengerechte Handhabung erforderlich ist.

Da die Lagerhaltung zudem wenig Kosten verursachen soll, besteht Bedarf an einfach, aber flexibel aufgebauten Lagern, die zudem eine effiziente Ein- und Auslagerung ermöglichen.

Da somit Waren und Gegenstände unterschiedlicher Größe und in unterschiedlichen Bindegrößen ein - und ausgelagert werden müssen, besteht ein Problem darin, dass übliche Lager, wie beispielsweise Hochregallager oder dergleichen, nur Standardlagerplätze bzw. Standardlagerflächen, z.B. in Regalfächern, sowie entsprechende Standardlagerbediengeräte zur Ein - und Auslagerung der Waren in und aus dem Lager zur Verfügung stehen, die dann u. U. auf Grund der unterschiedlichen Anzahl der zu handhabenden Waren und der verschiedenen Dimensionen der einzulagernden Gegenstände nicht optimal genutzt werden können. Daraus ergibt sich sodann ein hoher Platzbedarf für entsprechende Lager und oder eine ineffektive Handhabung der Waren, was mit entsprechenden Kosten verbunden ist.

### OFFENBARUNG DER ERFINDUNG

### AUFGABE DER ERFINDUNG

Es ist deshalb Aufgabe der vorliegenden Erfindung ein Lagersystem sowie ein Regalbediengerät für ein derartiges Lagersystem bereitzustellen, welche einen geringen Platzbedarf für das Lager und eine effiziente Ein - und Auslagerung der zu lagernden Waren ermöglichen. Gleichzeitig sollen jedoch ein entsprechendes Lagerbediengerät und Lager einfach aufgebaut und einfach betreibbar sein.

### TECHNISCHE LÖSUNG

Diese Aufgabe wird gelöst durch ein Regalbediengerät mit den Merkmalen des Anspruchs 1 sowie ein Lagersystem mit den Merkmalen des Anspruchs 9. Vorteilhafte Ausgestaltungen sind Gegenstand der abhängigen Ansprüche.

Die Erfindung schlägt vor, ein Lagersystem zu verwirklichen, welches erlaubt, in mindestens einem Regal des Lagers flexibel unterschiedlich dimensionierte Gegenstände ein - und auszulagern, wobei vorzugsweise ein Regal Verwendung findet, welches eine flexible Regalfacheinteilung ermöglicht, wie dies beispielsweise in der deutschen Patentanmeldung mit der Nummer DE 10 2013 107 438 beschrieben ist. Entsprechend wird der Offenbarungsgehalt dieser Patentanmeldung voll umfänglich in den Offenbarungsgehalt der vorliegenden Anmeldung aufgenommen.

Um die unterschiedlich geformten und/oder verschieden groß dimensionierten Gegenstände, die in dem Regal ein- und ausgelagert werden sollen, handhaben zu können, wird ein Regalbediengerät vorgeschlagen, welches eine Greifeinrichtung zum Greifen der ein- und auszulagernden Gegenstände und zum Bewegen der Gegenstände aus dem Regal und in das Regal aufweist, die so ausgebildet ist, dass mehrere unterschiedliche Arten von Gegenständen gehandhabt werden können, die sich insbesondere durch unterschiedliche Dimensionen und somit durch Unterschiede in der Größe, Form und/oder Anordnung von Angriffspunkten für die Greifeinrichtung zum Ergreifen der ein - und auszulagernden Gegenstände unterscheiden können. Mit einem derartigen Regalbediengerät können flexibel unterschiedlich dimensionierte Gegenstände gehandhabt werden, sodass ein entsprechendes Regal flexibel für unterschiedliche Gegenstände genutzt werden kann und eine Verringerung der vorzuhaltenden Lagerfläche möglich wird und die Ein - und Auslagerungsvorgänge effizient durchgeführt werden können.

Dies gilt insbesondere auch dann, wenn die unterschiedlichen Gegenstände oder Arten von Gegenständen zumindest teilweise durch Ladehilfsmittel, wie beispielsweise Paletten oder Trays oder dergleichen gebildet sind, auf denen beliebige Waren gelagert sein können. In diesem Fall können in dem entsprechenden Lagersystem mehrere unterschiedliche Ladehilfsmittel genutzt und von dem Regalbediengerät gehandhabt werden, auf denen eine Vielzahl unterschiedlicher Waren in beliebiger Anzahl gelagert sein können. Damit lassen sich die Anzahl der von dem Lagersystem zu handhabenden unterschiedlichen Arten von Gegenständen auf die Anzahl der unterschiedlichen Ladehilfsmittel begrenzen, da nur diese den Lagerplatzbedarf und die Art der Handhabung bestimmen, während die darauf gelagerten Waren hierauf keinen Einfluss mehr haben. Insbesondere kann dann auch ein Regal mit flexibler Regalfacheinteilung, wie vorher beschrieben, vorteilhaft eingesetzt werden, da die unterschiedlich geformten und/oder dimensionierten Ladehilfsmittel an die flexibel einzustellenden Regalfachgrößen angepasst werden können bzw. umgekehrt.

Die in dem Lagersystem verwendeten Ladehilfsmittel, wie beispielsweise Paletten, Trays und dergleichen können sich, wie bereits erwähnt, in ihren Dimensionen und ihrer Form unterscheiden und insbesondere unterschiedliche Angriffspunkte für die Greifeinrichtung des Regalbediengeräts aufweisen, an denen das Ladehilfsmittel von der Greifeinrichtung erfasst wird. Beispielsweise können unterschiedlich dimensionierte Paletten, wie Standard - Euro - Paletten oder Viertelpaletten Verwendung finden, bei denen Ein- und Angriffspunkte für eine Greifeinrichtung, wie z.B. Ladegabeln, ebenfalls unterschiedlich dimensioniert sind, also beispielsweise unterschiedliche Abstände zueinander aufweisen oder unterschiedlich dimensionierte Eingriffsöffnungen umfassen.

Die unterschiedlichen Ladehilfsmittel des Lagersystems bilden mit dem auf dem Ladehilfsmittel angeordneten Artikeln und Waren, die in dem Lagersystem ein - und auszulagernden Gegenstände. Beispielsweise kann in dem Lagersystem vorgesehen sein, Artikel auf Europaletten zu lagern sowie zusätzlich Artikel auf Viertelpaletten oder speziellen Trays. Für die Euro - Standard - Paletten können bestimmte Regalfächer in einem Regal vorgesehen sein und für die Viertelpaletten und speziell gestalteten Trays jeweils ebenso. Die Artikel die auf den entsprechenden Ladehilfsmittel gelagert sind, werden dann von dem Regalbediengerät in die speziellen Regalfächer ein- und ausgelagert, wobei die Greifeinrichtung die unterschiedlichen Ladehilfsmittel jeweils an den geeigneten Angriffspunkten aufnehmen kann.

Das Regalbediengerät, welches erfindungsgemäß mit einer Greifeinrichtung so ausgebildet ist, sodass mehrere unterschiedliche Arten von Gegenständen gehandhabt werden können, kann ansonsten einem bekannten Regalbediengerät gleichen. Insbesondere kann ein entsprechendes Regalbediengerät ein Lastaufnahmemittel zur Aufnahme der ein- und auszulagernden Gegenstände aufweisen, welches mit der Greifeinrichtung zusammenarbeitet, sodass die ein- und auszulagernden Gegenstände durch die Greifeinrichtung aus dem Regal entnommen und auf das Lastaufnahmemittel bewegt werden können und/oder umgekehrt vom Lastaufnahmemittel in das Regal eingelagert werden können. Die Greifeinrichtung und das Lastaufnahmemittel können hierbei so ausgebildet sein, dass die ein- und auszulagernden Gegenstände während der Lagerung auf dem Lastaufnahmemittel weiterhin von der Greifeinrichtung gehalten werden oder dass die ein- und auszulagernden Gegenstände während der Lagerung auf dem Lastaufnahmemittel von der Greifeinrichtung gelöst werden.

Das Regalbediengerät kann weiterhin ein Fahrgestell aufweisen, welches zum Bewegen des Regalbediengeräts entlang eines Regals dient, wobei die Bewegung auf eine Ebene erfolgen kann, die einen Fahrweg ausbildet und somit als Fahrebene bezeichnet werden kann. Insbesondere kann die Bewegung des Regalbediengeräts in der Fahrebene entlang eines zweidimensionalen, linearen Fahrwegs erfolgen, entlang dem sich das Regalbediengerät hin und her bewegen kann, wobei der Fahrweg in einer Regalgasse ausgebildet sein kann, die von zwei sich gegenüber stehenden Regalen begrenzt wird.

Das Fahrgestell kann entsprechende Bewegungsmittel, wie Räder, Gleitelemente, Führungselemente und dergleichen, sowie Antriebsmittel, wie Motoren, Seilzüge, Antriebszylinder oder dergleichen, aufweisen oder mit diesen zusammenwirken, um eine Bewegung des Regalbediengeräts zu ermöglichen.

Das Regalbediengerät kann weiterhin eine Hubeinrichtung aufweisen, die am Fahrgestell angeordnet ist und die beispielsweise mindestens einen, vorzugsweise zwei oder mehrere Hubmasten aufweist, die sich quer zur Fahrebene von dem Fahrgestell erstrecken und das Lastaufnahmemittel lagern, sodass das Lastaufnahmemittel durch die Hubeinrichtung entlang einer Richtung quer zur Fahrebene des Regalbediengeräts hin und her bewegt werden kann. Durch das Fahrgestell und die Hubeinrichtung ist es möglich dass das Lastaufnahmemittel des Regalbediengeräts jedes Lagerfach an mindestens einem Regal erreichen kann, sodass Gegenstände ein- und ausgelagert werden können.

Die Greifeinrichtung, die gemäß der Erfindung mehrere unterschiedliche Arten von Gegenständen, die sich insbesondere in ihrer Form und/oder Dimensionen und insbesondere den Angriffspunkten für die Greifeinrichtung zum Ergreifen der Gegenstände unterscheiden können, handhaben kann, kann mindestens eine Ladegabel aufweisen, mittels der die ein- und auszulagernden Gegenstände ergriffen werden können. Insbesondere kann die Greifeinrichtung mindestens zwei unterschiedliche Ladegabeln oder zwei unterschiedliche Ladegabelpaare umfassen, die so ausgebildet sind, dass sie die mindestens zwei unterschiedlichen Arten von Gegenständen handhaben können, also jeweils eine Art der Ladegabel oder eine Art des Ladegabelpaares eine Art von Gegenstand. Entsprechend der Unterscheidung der unterschiedlichen Arten von ein - und auszulagernden Gegenständen durch ihre Form und/oder Dimensionierung und/oder die Ausbildung unterschiedlicher Angriffspunkte für die Greifeinrichtung zum Ergreifen der Gegenstände, können die unterschiedlichen Ladegabeln oder Ladegabelpaare sich ebenfalls in ihrer Form und/oder Dimensionierung und/oder Positionierung am Regalbediengerät und insbesondere am Lastaufnahmemittel unterscheiden.

Die Greifeinrichtung kann mindestens ein Ladegabelpaar umfassen, bei welchem der Abstand zwischen den Ladegabeln veränderbar ist, um so unterschiedliche Arten von Gegenständen mit unterschiedlich beabstandeten Angriffspunkten durch die Greifeinrichtung handhaben zu können.

Die Ladegabeln der Greifeinrichtung können so auf dem Lastaufnahmemittel angeordnet sein, dass sie auf dem Lastaufnahmemittel bewegbar, insbesondere verschiebbar angeordnet sind und zwar vorzugsweise linear bewegbar in eine Richtung parallel zur Fahrtrichtung des Regalbediengeräts.

Die Ladegabeln können entsprechend einen Ladegabelzinken und eine Verstelleinrichtung aufweisen, die zusammen mit dem Ladegabelzinken auf dem Lastaufnahmemittel bewegbar ist oder für die Beweglichkeit des Ladegabelzinken sorgt.

Die unterschiedliche Form und/oder Dimension von Ladegabeln zum Ergreifen unterschiedlicher Arten von Gegenständen kann durch die unterschiedliche Ausbildung der Ladegabelzinken realisiert sein, insbesondere durch unterschiedliche Form und/oder Dimension des Querschnitts der Ladegabelzinken.

Die Ladegabeln der Greifeinrichtung können als Teleskopgabeln ausgebildet sein, die vorzugsweise in eine Richtung quer zur Fahrtrichtung teleskopierbar sind, um in die Regalfächer des benachbarten Regals eingreifen zu können. Insbesondere können die Ladegabeln der Greifeinrichtung in zwei entgegengesetzte Richtungen teleskopierbar sein, sodass die Greifeinrichtung Regalfächer an zwei gegenüberliegend angeordneten Regalen, zwischen denen das Regalbediengerät in der Regalgasse angeordnet ist, bedienen kann.

Die Greifeinrichtung kann mindestens zwei unterschiedlich ausgebildete Ladegabelpaare aufweisen, die paarweise nebeneinander oder ineinander angeordnet sein können, also beispielsweise ein Paar von Ladegabeln zwischen den Ladegabeln eines anderen Paars von Ladegabeln, wobei groß dimensionierte Ladegabeln außen und klein dimensionierte Ladegabeln innen angeordnet sein können.

Das Lastaufnahmemittel kann durch eine plattenförmige oder rahmenförmige Ladeplattform oder einen Ladebalken gebildet sein.

### KURZBESCHREIBUNG DER FIGUREN

Die beigefügten Figuren zeigen in rein schematischer Weise in
Fig. 1 eine Seitenansicht eines Regals,
Fig. 2 einen Querschnitt durch eine Regalanordnung mit einem dazwischen vorgesehenem Regalbediengerät und in
Fig. 3 eine Seitenansicht eines Regalbediengeräts.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels deutlich. Allerdings ist die Erfindung nicht auf dieses Ausführungsbeispiel beschränkt.

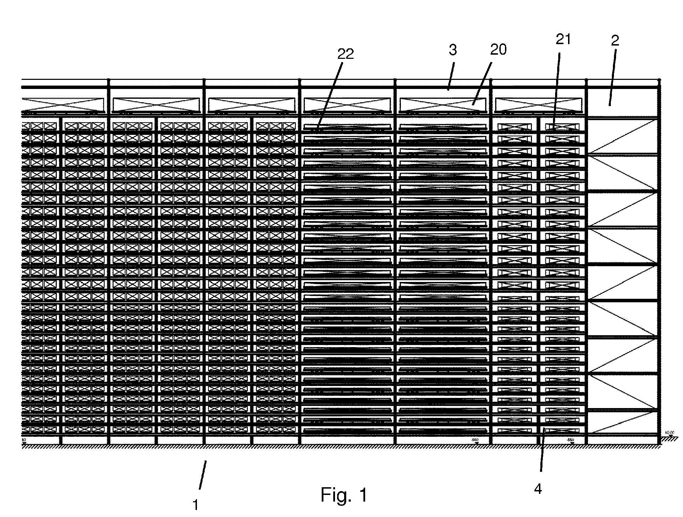

Die Figur 1 zeigt eine Seitenansicht eines Regals 1, welches eine Vielzahl von Regalfächern 2, 3, 4 aufweist, die nebeneinander und übereinander angeordnet sind. Die Regalfächer 2, 3, 4 dienen zur Aufnahme von Gegenständen 20, 21, 22, die in den Regalfächern 2, 3, 4 gelagert werden können.

Wie sich aus der Figur 1 ergibt, weist das Regal 1 eine Vielzahl von unterschiedlichen Regalfächern 2, 3, 4 auf, die sich in ihren Dimensionen, d. h. der Regalfachbreite und Regalfachhöhe unterscheiden und entsprechend unterschiedliche Gegenstände 20, 21, 22 aufnehmen können. So ist in der Figur 1 zu erkennen, dass das Regalfach 2 und das Regalfach 3 die gleiche Regalfachhöhe aufweisen, aber das Regalfach 3 eine größere Regalfachbreite als das Regalfach 2 aufweist. Die Regalfächer 4 wiederum weisen die halbe Regalfachbreite des Regalfachs 3 auf und die Regalfachhöhe beträgt einen Bruchteil der Regalfachhöhe der Regalfächer 2 oder 3. Entsprechend kann das Regalfach 3 größere Gegenstände aufnehmen, als das Regalfach 4, insbesondere größere Gegenstände hinsichtlich der Breiten - und Höhendimension.

Wie sich weiter aus Figur 1 ergibt, können zusätzlich weitere unterschiedliche Regalfächer und entsprechend weitere unterschiedlich dimensionierte Gegenstände vorgesehen sein, die in die Regalfächer des Regals 1 eingelagert sind. Insbesondere kann es sich bei dem Regal 1 um ein Regal handeln, welches variabel einrichtbare Regalfächer 2, 3, 4 aufweist. Dies bedeutete, dass die Regalfächer 2, 3, 4 je nach Bedarf mit unterschiedlichen Dimensionen eingerichtet werden können.

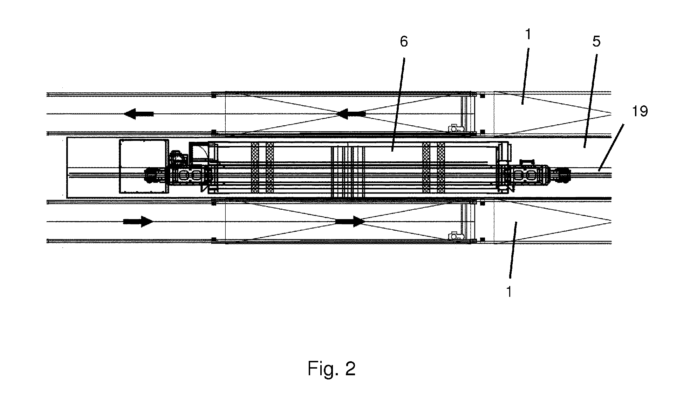

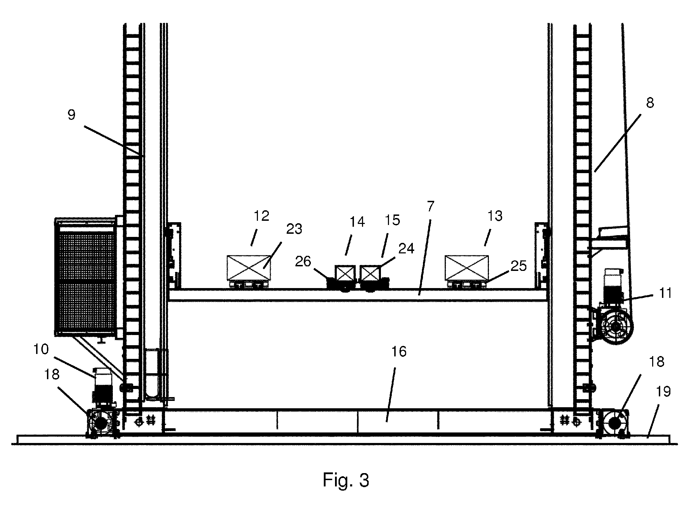

Die Figuren 2 und 3 zeigen ein Regalbediengerät 6, welches im Zusammenhang mit einem Regal 1, wie es in Figur 1 dargestellt ist, eingesetzt werden kann, um Gegenstände 20, 21 , 22 aus den Regalfächern 2, 3, 4 zu entnehmen oder in umgekehrter Weise einzulagern. Wie sich insbesondere aus der Figur 2 ergibt, ist das Regalbediengerät 6 in einer Regalgasse 5 angeordnet, die zwischen zwei gegenüberstehenden Regalen 1 ausgebildet ist. Damit ist es möglich, dass mit dem Regalbediengerät 6 zwei Regale 1 bedient werden, also Gegenstände ein- und ausgelagert werden.

Um die verschiedenen Regalfächer 2, 3, 4 der Regale 1 zu erreichen, weist das Regalbediengerät 6 ein Fahrgestell 16 auf, welches dazu dient das Regalbediengerät 6 in der Regalgasse 5 zwischen den Regalen 1 zu verfahren. Das Fahrgestellt 16 weist hierzu Bewegungsmittel in Form von Rädern 18 auf, die in einer Schiene 19 geführt sind und es erlauben, dass sich das Fahrgestell 16 in der Regalgasse 5 zumindest linear hin und her bewegen kann. Beispielsweise können die Bewegungsmittel auch durch Gleitelemente, die korrespondierend zu einer in der Regalgasse 5 angeordnete Schienenordnung 19 ausgebildet sind, realisiert werden. Damit ist es möglich, dass das Regalbediengerät 6 durch Gleiten von Gleitelementen auf den Schienen 19 oder durch Rollen mittels Räder 18 in einer Schienenanordnung 19 linear hin und her bewegt wird, sodass das Regalbediengerät 6 entlang der Regalfront der Regale 1 bewegt werden kann. Anstelle der Kombination aus Schienenanordnung und am Fahrgestell befestigten Gleitelementen bzw. Rädern können auch beliebig andere Bewegungsmittel an oder in Bezug auf das Fahrgestell 16 vorgesehen sein, die eine Bewegung entlang einer Ebene, die zwischen den gegenüberstehenden Regalen 1 aufgespannt ist, ermöglichen.

Wie der Figur 3 zu entnehmen ist, sind bei dem gezeigten Ausführungsbeispiel des Regalbediengeräts 6 an dem Fahrgestell 16 zwei Hubmasten 8, 9 angeordnet, die sich senkrecht zu der Bewegungsebene, auf der das Fahrgestell 16 bewegt werden kann, erstrecken, also insbesondere von dem Fahrgestell 16 vertikal nach oben hervorstehen.

An den Hubmasten 8, 9 ist ein Lastaufnahmemittel 7 in Form einer Ladeplattform oder eines Ladebalkens angeordnet, welches entlang der Hubmasten 8, 9 verfahrbar ausgebildet ist. Das Lastaufnahmemittel 7 kann somit in unterschiedlichen Höhen in Bezug auf die Fahrebene des Fahrgestells 16 angeordnet werden, sodass das Lastaufnahmemittel 7 nicht nur durch das Fahrgestell 16 bezüglich verschiedener Reihen der Regalfächer 2, 3, 4 des Regals 1 angeordnet werden kann, sondern mittels des an den Hubmasten 8, 9 verfahrbaren Lastaufnahmemittels 7 auch bezüglich verschiedener Regalfächer 2, 3, 4 in unterschiedlichen Höhen bezüglich der Fahrebene des Fahrgestells 16 angeordnet werden kann. Somit ist es möglich mit dem Lagerbediengerät 6 sämtliche Regalfächer 2, 3, 4 der dem Regalbediengerät 6 zugeordnete Regale 1 zu erreichen.

Das Lastaufnahmemittel 7 kann durch geeignete Hubmechanismen an den Hubmasten 8, 9 verfahrbar ausgebildet sein. Als Hubmechanismen kommen sämtliche Einrichtungen in Betracht, die ein Verfahren des Lastaufnahmemittels 7 entlang der Hubmasten 8, 9 ermöglichen. Beispielsweise kann es sich hier um Seilzüge, pneumatische oder hydraulische Hubzylinder, Linearmotoren, elektrisch oder in sonstiger Weise angetriebene Zahnrad - oder Kettenantriebe und dergleichen handeln.

Zum Antrieb des Fahrgestells 16 und/oder des Lastaufnahmemittels 7 können an dem Regalbediengerät Motoren 10, 11, insbesondere Elektromotoren vorgesehen sein, die die entsprechenden Bewegungsmittel und/oder Hubmechanismen antreiben können. Statt auf dem Regalbediengerät mitgeführter Antriebsmittel in Form von beispielsweise Elektromotoren, ist es jedoch auch vorstellbar, dass der Antrieb zumindest hinsichtlich des Fahrgestells 16 nicht auf dem Regalbediengerät mitgeführt, also mitbewegt wird, sondern stationär angeordnet ist und sich das Fahrgestellt 16 relativ zum Antrieb bewegt.

Wie bereits vorher erwähnt kann das Lastaufnahmemittel 7 als Ladeplattform der als Ladebalken ausgebildet sein. Bei einer Ladeplattform handelt es sich beispielsweise um eine Platte oder einen Rahmen, der sowohl in Längsrichtung (in der Bildebene der Fig. 3) als auch in Breitenrichtung (senkrecht zur Bildebene der Fig. 3) eine deutliche Ausdehnung aufweist, wobei beispielsweise die Breite im Bereich von 20 % bis 75 % der Längserstreckung liegen kann. Von einem Ladebalken wird dagegen dann gesprochen, wenn die Breitenerstreckung der Platte oder eines plattenförmigen Rahmens weniger als 20 % der Länge aufweist. Die Erstreckung in Dickenrichtung einer entsprechenden Ladeplattform oder eines Ladebalkens ist üblicherweise kleiner als die Breite und Länge des Lastaufnahmemittels 7 des Regalbediengeräts und verläuft in der Richtung der Hubmasten 8, 9 also insbesondere in vertikaler Richtung.

Auf dem Lastaufnahmemittel 7 sind in dem gezeigten Ausführungsbeispiel an der Oberseite vier Ladegabeln 12, 13, 14, 15 angeordnet, die eine Greifeinrichtung bilden, mit deren Hilfe Gegenstände 20, 21, 22 aus den Regalfächern 2, 3, 4 des Regals 1 entnommen oder in dieses eingelagert werden können.

Die Ladegabeln 12, 13, 14, 15 sind in dem gezeigten Ausführungsbeispiel paarweise identisch ausgebildet oder von ihren Dimensionen zumindest korrespondierend ausgebildet, während sich die Ladegabeln 12, 13, 14, 15 von Paar zu Paar zumindest in ihren Dimensionen unterscheiden. Es bilden bei dem gezeigten Ausführungsbeispiel die Ladegabeln 12 und 13 ein Paar, während die Ladegabeln 14 und 15 ein zweites Paar bilden. Wie sich einfach aus der Figur 3 ergibt, sind die Ladegabeln 12, 13 bzw. 14, 15 eines Paars in ihren Dimensionen gleich ausgebildet, was sich in der Figur 3 dadurch zeigt, dass die Querschnitte der Ladegabelzinken 23, 24 der Ladegabeln paarweise gleich sind.

Die Ladegabeln 12, 13, 14, 15 können entsprechend paarweise verwendet werden oder auch einzeln.

Die Ladegabeln 12, 13, 14, 15 sind auf dem Lastaufnahmemittel 7 beweglich aufgenommen, sodass sie in der Längsrichtung des Lastaufnahmemittels 7, welche sich zwischen dem Hubmasten 8, 9 erstreckt, verfahrbar sind. Dazu weisen die Ladegabeln 12, 13, 14, 15 zwischen den Ladegabelzinken 23, 24 Verschiebeeinrichtungen 25, 26 auf, mittels denen die Ladegabelzinken 23, 24 auf dem Lastaufnahmemittel 7 linear verschoben werden können, und zwar in Längsrichtung des Lastaufnahmemittels 7. Entsprechend kann die Anordnung jeder Ladegabel 12, 13, 14, 15 bezüglich der Längsrichtung des Lastaufnahmemittels 7 verstellt werden. Insbesondere kann dadurch erreicht werden, dass der Abstand der paarweise genutzten Ladegabeln 12, 13 bzw. 14, 15 zueinander einstellbar ist, sodass unterschiedlich dimensionierte Gegenstände durch die Ladegabeln 12, 13, 14, 15 aufgenommen werden können. Beispielsweise lässt sich der Abstand der Ladegabeln 14, 15 bei einem Anwendungsfall auf einen ersten Abstand einstellen, in dem ein eine erste Art von Gegenstand 21 aufgenommen werden kann, während bei einem anderen Anwendungsfall der Abstand auf einen zweiten Abstand eingestellt werden kann, bei dem eine zweite Art von Gegenstand 22 aufgenommen werden kann.

Die Verschiebeeinrichtungen 24, 25 der Ladegabeln 12, 13, 14, 15 können durch alle geeigneten Vorrichtungen gebildet sein, die ein lineares Verschieben der Ladegabeln 12, 13, 14, 15 entlang der Längserstreckung des Lastaufnahmemittels 7 ermöglichen, wie beispielsweise Linearmotoren, Linearführungen mit kombinierten Radantrieben, Seilantrieben, Kettenantrieben, Zahnradantrieben und entsprechende Elektromotoren hierzu.

Neben der Positionseinstellung der Ladegabeln 12, 13, 14, 15 hinsichtlich der Längsrichtung des Lastaufnahmemittels 7 ermöglicht das Vorsehen unterschiedlich dimensionierter Ladegabeln 12, 13, 14, 15 eine sehr flexible Anwendung der durch die Ladegabeln 12, 13, 14, 15 geschaffenen Greifeinrichtung zur Aufnahme und Handhabung von Gegenständen bei der Ein- und Auslagerung in das Regal 1.

Die Ladegabeln 12, 13, 14, 15 sind bei dem gezeigten Ausführungsbeispiel als Teleskopgabeln ausgebildet, sodass ineinander verfahrbare (nicht gezeigt) Ladegabelzinken vorgesehen sind, die in Richtung der Regalfächer 2, 3, 4, 5 benachbarter Regale 1 ausgefahren werden können, um in die Regalfächer 2, 3, 4 eingreifen zu können und dort Gegenstände aufzunehmen oder abzuladen. Entsprechend ist die Teleskopierbarkeit bzw. das Ausfahren der Teleskopstangen 23, 24 in einer Richtung senkrecht zur Bildebene der Figur 3 möglich, vorzugsweise in zwei entgegengesetzte Richtungen, um mit einem Regalbediengerät zwei gegenüber stehende Regale bedienen zu können.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die vorliegende Offenbarung schließt sämtliche Kombinationen der vorgestellten Einzelmerkmale mit ein.

## Patentansprüche

1. Regalbediengerät zur Ein - und Auslagerung von Gegenständen in ein Regal (1) mit einem Lastaufnahmemittel (7) zur Aufnahme der ein - und auszulagernden Gegenstände auf dem Regalbediengerät,
einer Greifeinrichtung (12,13,14,15) zum Ergreifen der ein - und auszulagernden Gegenstände und zum Bewegen der Gegenstände aus dem Regal auf das Lastaufnahmemittel und/oder vom Lastaufnahmemittel in das Regal,
einem Fahrgestell (16), welches zum Bewegen des Regalbediengeräts auf einer ersten Ebene entlang mindestens eines Regals dient,
einer Hubeinrichtung (8,9), die am Fahrgestell angeordnet ist und an der das Lastaufnahmemittel angeordnet ist und dazu dient das Lastaufnahmemittel entlang einer Richtung zu bewegen, die quer zur ersten Ebene verläuft,
**dadurch gekennzeichnet, dass**
die Greifeinrichtung so ausgebildet ist, dass mehrere unterschiedliche Arten von Gegenstände gehandhabt werden können.

2. Regalbediengerät nach Anspruch 1,
**dadurch gekennzeichnet, dass**
die Greifeinrichtung (12,13,14,15) mindestens zwei unterschiedliche Ladegabeln oder Ladegabelpaare umfasst, die ausgebildet sind mindestens zwei unterschiedliche Arten von Gegenständen zu handhaben.

3. Regalbediengerät nach Anspruch 1 oder 2,
**dadurch gekennzeichnet, dass**
die Greifeinrichtung mindestens ein Ladegabelpaar (12,13;14,15) umfasst, bei welchem der Abstand zwischen den Ladegabeln veränderbar ist.

4. Regalbediengerät nach einem der vorhergehenden Ansprüche,
**dadurch gekennzeichnet, dass**
die Greifeinrichtung mindestens eine, vorzugsweise mehrere Ladegabeln (12,13,14,15) umfasst, die in zumindest einer Richtung, vorzugsweise in einer Richtung parallel zur Fahrtrichtung des Regalbediengeräts, auf dem Lastaufnahmemittel verschiebbar angeordnet ist.

5. Regalbediengerät nach einem der vorhergehenden Ansprüche,
**dadurch gekennzeichnet, dass**
die Greifeinrichtung mindestens zwei Ladegabeln (12,13;14,15) umfasst, die jeweils einen Ladegabelzinken (23,24) aufweisen, wobei die Ladegabelzinken sich im Querschnitt in ihrer Form und/oder Dimensionen unterscheiden.

6. Regalbediengerät nach einem der vorhergehenden Ansprüche,
**dadurch gekennzeichnet, dass**
die Greifeinrichtung mindestens eine Ladegabel (12,13,14,15) umfasst, wobei die Ladegabel eine Teleskopgabel ist, die vorzugsweise in einer Richtung quer zur Fahrtrichtung des Regalbediengeräts teleskopierbar ist.

7. Regalbediengerät nach einem der vorhergehenden Ansprüche,
**dadurch gekennzeichnet, dass**
die Greifeinrichtung mindestens zwei unterschiedliche Ladegabelpaare (12,13;14,15) aufweist, wobei die Ladegabeln des einen Paars zwischen den Ladegabeln des anderen Paares oder jeweils paarweise nebeneinander angeordnet sind.

8. Regalbediengerät nach einem der vorhergehenden Ansprüche,
**dadurch gekennzeichnet, dass**
das Lastaufnahmemittel (7) durch eine Ladeplattform oder einen Ladebalken, insbesondere in Form einer Platte oder eines Rahmens gebildet ist.

9. Lagersystem mit mindestens einem Regal (1) und mindestens einem Regalbediengerät (6) nach einem der vorhergehenden Ansprüche.

10. Lagersystem nach Anspruch 9,
**dadurch gekennzeichnet, dass**
das System Ladehilfsmittel aufweist, auf denen die im Regal zu lagernden Gegenstände gelagert sind, wobei mindestens zwei unterschiedliche Ladehilfsmittel vorgesehen sind.

11. Lagersystem nach Anspruch 9 oder 10,
**dadurch gekennzeichnet, dass**
die Ladehilfsmittel sich in ihren Dimensionen unterscheiden und insbesondere unterschiedliche Angriffspunkte für die Greifeinrichtung des Regalbediengeräts aufweisen.
